# EUROPEAN PATENT APPLICATION

(11) **EP 2 961 205 A1**
(43) Date of publication of application: **30.12.2015**
(21) Application number: 13875818.0
(22) Date of filing: 31.12.2013
(51) Int. Cl.: H04W 4/20

(54) **DATA TRANSMISSION METHOD, APPARATUS AND SYSTEM**

(30) Priority: 25.02.2013 CN 201310059041
(71) Applicant: ZTE Corporation, Shenzhen, Guangdong 518057 (CN)
(72) Inventor: CUI, Yunpeng, Shenzhen Guangdong 518057 (CN); DAI, Qian, Shenzhen Guangdong 518057 (CN); MAO, Lei, Shenzhen Guangdong 518057 (CN)
(74) Representative: Mozzi, Matteo
(86) International application number: PCT/CN2013/091163
(87) International publication number: WO 2014/127677

(57) **Abstract**

Provided are data transmission methods, devices and system. The method includes that: User Equipment (UE) sends data processing capability information of the UE to network equipment; and the UE performs small data transmission with the network equipment according to a small data transmission method determined by the network equipment, wherein the small data transmission method is determined by the network equipment according to the data processing capability information of the UE. According to the technical solutions, the UE sends its own data processing capability information to the network equipment to enable the network equipment to learn about the small data transmission method which can be used by the UE to determine the method for the transmission of the small data between the UE and the network equipment. Similarly, the network equipment may also send its own data processing capability information to the UE, so that the UE and the network equipment are ensured to have the same cognition about small data processing capability. By virtue of the technical solutions, advantages of a finally selected small data processing solution are fully utilized, and an abnormal condition caused by the capability mismatching of the network equipment and the UE is reduced.

## Description

### Technical Field

The present disclosure relates to the field of communication, and in particular to data transmission methods, devices and system.

### Background

At present, the amount of data sent or received by User Equipment (UE) is not so large (usually dozens to hundreds of bytes) in many UE application scenarios, and data can be sent in one transmission only by a small amount of physical resources, for example, in a smart home service or a background class service. According to an existing protocol standard, the establishment of a complete signalling flow is still required even though the amount of transmitted data is small, which brings high signalling overhead relative to the amount of the transmitted data during data transmission and seriously reduces system efficiency, so that it is imperative to make researches on the characteristic of the small data transmission. Present researches on small data mainly focus on how to reduce Control Plane (CP) signalling overhead brought by data transmission.

For the problem of how to reduce CP signalling overhead brought by data transmission, some solutions have been provided at present, mainly including carrying small data with CP signalling, sending the small data with a short message service, rapidly establishing a connection or the like. In consideration of differences between network and UE versions or differences in strategies of operating companies, there may exist differences in whether supporting optimized small data transmission methods or not or in supported optimized small data transmission methods between a network and UE, which may cause a failure of small data transmission between the UE and the network and even cause an abnormal condition to increase network processing complexity instead.

For the problem that an optimized small data transmission solution cannot be completely utilized and network processing complexity may even be increased due to the fact that network equipment and UE may be mismatched in small data processing capability in a related technology, there is yet no effective solution.

### Summary

The embodiments of the present disclosure provide data transmission methods, devices and system, so as to at least solve the problem that an optimized small data transmission solution cannot be completely utilized and network processing complexity may even be increased due to the fact that network equipment and UE may be mismatched in small data processing capability in a related technology.

According to one aspect of the embodiments of the present disclosure, a data transmission method is provided, which includes that: UE sends data processing capability information of the UE to network equipment; and the UE performs small data transmission with the network equipment according to a small data transmission method determined by the network equipment, wherein the small data transmission method is determined by the network equipment according to the data processing capability information of the UE, and a size of small data is within a preset range.

In an example embodiment, the UE sends the data processing capability information of the UE to the network equipment in one of manners as follows: adding an Information Element (IE) for indicating the data processing capability information of the UE into existing uplink Radio Resource Control (RRC) signalling; adding an uplink Media Access Control (MAC) Control Element (CE) for indicating the data processing capability information of the UE; adding the data processing capability information of the UE into uplink Non-Access Stratum (NAS) signalling; and sending the data processing capability information of the UE via an RRC message and/or an NAS message.

In an example embodiment, the step that the UE sends the data processing capability information of the UE to the network equipment includes that: the UE sends the data processing capability information of the UE to the network equipment by signalling interaction in a process of connection with the network equipment.

In an example embodiment, the process of connection between the UE and the network equipment includes one of: an RRC connection establishment process, a mobility management process, a session management process and a switching process.

In an example embodiment, the data processing capability information of the UE includes at least one of: information indicating whether the UE supports a small data transmission method or not; and information indicating one or more small data transmission methods allowed to be used by the UE.

According to another aspect of the embodiments of the present disclosure, a data transmission method is provided, which includes that: access network equipment sends data processing capability information of the access network equipment to UE; and the access network equipment performs small data transmission with the UE according to a small data transmission method determined by the UE, wherein the small data transmission method is determined by the UE according to the data processing capability information of the access network equipment, and a size of small data is within a preset range.

In an example embodiment, the access network equipment sends the data processing capability information of the access network equipment to the UE in one of manners as follows: adding an IE for indicating the data processing capability information of the access network equipment into existing downlink RRC signalling; adding a downlink MAC CE for indicating the data processing capability information of the access network equipment; adding the data processing capability information of the access network equipment into a system message; sending the data processing capability information of the access network equipment via an RRC message; and indicating the data processing capability information of the access network equipment via a Tracking Area Identity (TAI) list.

In an example embodiment, the step that the access network equipment sends the data processing capability information of the access network equipment to the UE includes that: the access network equipment sends the data processing capability information of the access network equipment to the UE by signalling interaction in a process of connection with the UE.

In an example embodiment, the process of connection between the access network equipment and the UE includes one of: an RRC connection establishment process, a system message transmission process, a switching process, a mobility management process and a session management process.

In an example embodiment, the data processing capability information of the access network equipment includes at least one of: information indicating whether the access network equipment supports a small data transmission method or not; and information indicating one or more small data transmission methods allowed to be used by the access network equipment.

According to another aspect of the embodiments of the present disclosure, a data transmission method is provided, which includes that: core network equipment sends data processing capability information of the core network equipment to UE; and the core network equipment performs small data transmission with the UE according to a small data transmission method determined by the UE, wherein the small data transmission method is determined by the UE according to the data processing capability information of the core network equipment, and a size of small data is within a preset range.

In an example embodiment, the core network equipment sends the data processing capability information of the core network equipment to the UE in one of manners as follows: adding an IE for indicating the data processing capability information of the core network equipment into existing downlink NAS signalling; indicating the data processing capability information of the core network equipment via a TAI list; and sending the data processing capability information of the core network equipment via a NAS message.

In an example embodiment, the step that the core network equipment sends the data processing capability information of the core network equipment to the UE includes that: the core network equipment sends the data processing capability information of the core network equipment to the UE by signalling interaction in a process of connection with the UE.

In an example embodiment, the process of connection between the core network equipment and the UE includes one of: a mobility management process and a session management process.

In an example embodiment, the data processing capability information of the core network equipment includes at least one of: information indicating whether the core network equipment supports a small data transmission method or not; and information indicating one or more small data transmission methods allowed to be used by the core network equipment.

According to another aspect of the embodiments of the present disclosure, a data transmission device is provided, which is applied to UE and includes: a first sending component, configured to send data processing capability information of the UE to network equipment; and a first transmission component, configured to perform small data transmission with the network equipment according to a small data transmission method determined by the network equipment, wherein the small data transmission method is determined by the network equipment according to the data processing capability information of the UE, and a size of small data is within a preset range.

According to another aspect of the embodiments of the present disclosure, a data transmission device is provided, which is applied to access network equipment and includes: a second sending component, configured to send data processing capability information of the access network equipment to UE; and a second transmission component, configured to perform small data transmission with the UE according to a small data transmission method determined by the UE, wherein the small data transmission method is determined by the UE according to the data processing capability information of the access network equipment, and a size of small data is within a preset range.

According to another aspect of the embodiments of the present disclosure, a data transmission device is provided, which is applied to core network equipment and includes: a third sending component, configured to send data processing capability information of the core network equipment to UE; and a third transmission component, configured to perform small data transmission with the UE according to a small data transmission method determined by the UE, wherein the small data transmission method is determined by the UE according to the data processing capability information of the core network equipment, and a size of small data is within a preset range.

According to another aspect of the embodiments of the present disclosure, a data transmission system is provided, which includes: UE, access network equipment and core network equipment, wherein the UE includes the abovementioned data transmission device applied to the UE, the access network equipment includes the abovementioned data transmission device applied to the access network equipment, and the core network equipment includes the abovementioned data transmission device applied to the core network equipment.

According to the embodiments of the present disclosure, the UE sends the data processing capability information of the UE to the network equipment to enable the network equipment to learn about the small data transmission method which can be used by the UE to determine the method for the transmission of the small data between the UE and the network equipment. Similarly, the network equipment may also send the data processing capability information of the network equipment to the UE, so that the UE and the network equipment are ensured to have the same cognition about small data processing capability. By virtue of the technical solutions, advantages of a finally selected small data processing solution are fully utilized, an abnormal condition caused by the capability mismatching of the network equipment and the UE is reduced, and the aims of reducing signalling overhead brought by small data transmission, optimizing network performance and improving system efficiency are finally fulfilled.

### Brief Description of the Drawings

The drawings described here are adopted to provide further understanding of the embodiment of the present disclosure, and form a part of the present disclosure. Schematic embodiments of the present disclosure and description thereof are adopted to explain the present disclosure and not intended to form improper limits to the present disclosure. In the drawings:
Fig. 1 is a first flowchart of a data transmission method according to an embodiment of the present disclosure;
Fig. 2 is a second flowchart of a data transmission method according to an embodiment of the present disclosure;
Fig. 3 is a third flowchart of a data transmission method according to an embodiment of the present disclosure;
Fig. 4 is a first structure diagram of a data transmission device according to an embodiment of the present disclosure;
Fig. 5 is a second structure diagram of a data transmission device according to an embodiment of the present disclosure;
Fig. 6 is a third structure diagram of a data transmission device according to an embodiment of the present disclosure;
Fig. 7 is a flowchart of interaction of small data processing capability information between UE and access network equipment via existing RRC signalling according to example embodiment 1 of the present disclosure;
Fig. 8 is a flowchart of interaction of small data processing capability information between UE and core network equipment via NAS signalling according to example embodiment 2 of the present disclosure;
Fig. 9 is a flowchart of interaction of small data processing capability information between UE and access network equipment via MAC CE signalling according to example embodiment 3 of the present disclosure;
Fig. 10 is a flowchart of indicating small data processing capability information to UE by access network equipment via a system message according to example embodiment 4 of the present disclosure;
Fig. 11 is a flowchart of learning about small processing capability information of access network equipment and core network equipment by UE via a TAI list and system information according to example embodiment 5 of the present disclosure;
Fig. 12 is a flowchart of interaction of small data processing capability information between UE and access network equipment via new RRC signalling according to example embodiment 6 of the present disclosure;
Fig. 13 is a flowchart of interaction of small data processing capability information between UE and access network equipment via new NAS signalling according to example embodiment 7 of the present disclosure;
Fig. 14 is a flowchart of interaction of small data processing capability information between UE and a target Evolved NodeB (eNB) via RRC signalling according to example embodiment 8 of the present disclosure; and
Fig. 15 is a bitmap diagram of a small data transmission solution according to an example embodiment of the present disclosure.

### Detailed Description of the Embodiments

It is important to note that the embodiments in the present disclosure and characteristics in the embodiments can be combined under the condition of no conflicts. The present disclosure is described below with reference to the drawings and the embodiments in detail.

In the related technology, network equipment and UE may be mismatched in small data processing capability, which makes it impossible to fully utilize an optimized small data transmission solution and even increases network processing complexity. On such a basis, the embodiments of the present disclosure provide methods for solving the technical solution, namely, the network equipment and the UE interact about their own small data processing capabilities. Description is given below from a UE side and a network equipment side (e.g. access network equipment or core network equipment) respectively.

### (1) On the UE side

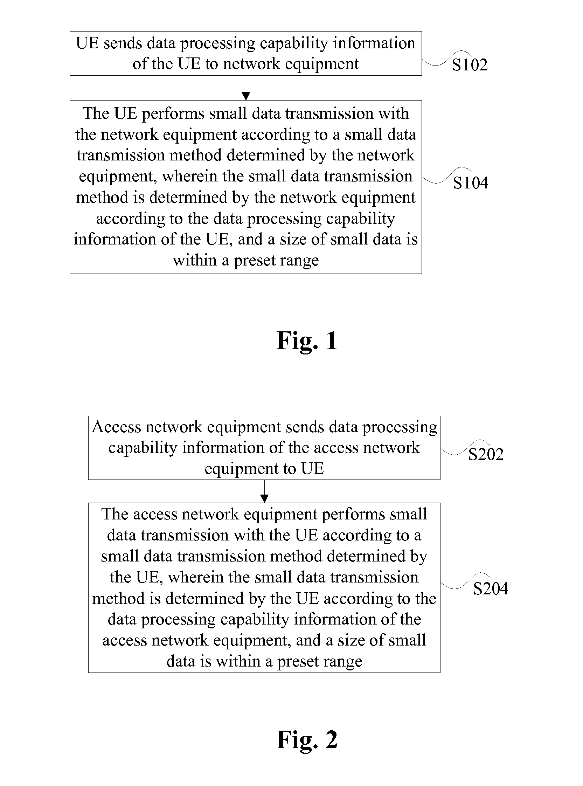

The embodiment of the present disclosure provides a data transmission method. Fig. 1 is a first flowchart of a data transmission method according to an embodiment of the present disclosure. As shown in Fig. 1, the method includes the following Step S102 to Step S104.
Step S102: UE sends data processing capability information of the UE to network equipment.
Step S104: the UE performs small data transmission with the network equipment according to a small data transmission method determined by the network equipment, wherein the small data transmission method is determined by the network equipment according to the data processing capability information of the UE, and a size of small data is within a preset range.

In the embodiment, the UE sends the data processing capability information of the UE to the network equipment to enable the network equipment to learn about the small data transmission method which can be used by the UE to determine the method for the transmission of the small data between the UE and the network equipment. In this way, the UE and the network equipment are ensured to have the same cognition about small data processing capability, advantages of a selected small data processing solution are fully utilized, an abnormal condition caused by the capability mismatching of the network equipment and the UE is reduced, and the aims of reducing signalling overhead brought by small data transmission, optimizing network performance and improving system efficiency are finally fulfilled. For an example about the small data, data with dozens to hundreds of bytes may be defined as small data.

It is important to note that the UE has a characteristic of small data transmission, and the small data transmission method may be carrying the small data with CP signalling, sending the small data with a short message service, rapidly establishing a connection or the like. All of the small data transmission methods (also called small data processing methods) are optimized solutions proposed for small data transmission at present, which can reduce signalling overhead brought by small data transmission. Of course, the method of the embodiment of the present disclosure may also be applied to other small data transmission solutions. The above description also applies to the small data transmission methods involved in the solution described from the network equipment side, and repeated description will not be given later.

In an example embodiment, the data processing capability information of the UE includes at least one of: information indicating whether the UE supports a small data transmission method or not (that is, whether the UE supports the use of an optimized small data processing method or not); and information indicating one or more small data transmission methods allowed to be used by the UE (i.e. optimized small data processing methods which can be used by the UE). The data processing capability information of the UE can assist the network equipment in determining the processing method to be adopted when small data is sent or received.

In Step S102, the UE may send the data processing capability information of the UE to the network equipment in one of manners as follows: adding an IE for indicating the data processing capability information of the UE into existing uplink RRC signalling; adding an uplink MAC CE for indicating the data processing capability information of the UE; adding the data processing capability information of the UE into uplink NAS signalling; and sending the data processing capability information of the UE via an RRC message and/or an NAS message. It is important to note that the RRC message and/or the NAS message may be newly defined specially for transmitting the data processing capability information.

In an example embodiment, the step that the UE sends the data processing capability information of the UE to the network equipment includes that: the UE sends the data processing capability information of the UE to the network equipment by signalling interaction in a process of connection with the network equipment. In an example embodiment, the process of connection between the UE and the network equipment includes one of: an RRC connection establishment process, a mobility management process, a session management process and a switching process.

### (2) On the access network equipment side

The embodiment of the present disclosure further provides a data transmission method. Fig. 2 is a second flowchart of a data transmission method according to an embodiment of the present disclosure. As shown in Fig. 2, the method includes the following Step S202 to Step S204.
Step S202: access network equipment sends data processing capability information of the access network equipment to UE.
Step S204: the access network equipment performs small data transmission with the UE according to a small data transmission method determined by the UE, wherein the small data transmission method is determined by the UE according to the data processing capability information of the access network equipment, and a size of small data is within a preset range.

In the embodiment, the access network equipment sends the data processing capability information of the access network equipment to the UE to enable the UE to learn about the small data transmission method which can be used by the access network equipment to determine the method for the transmission of the small data between the access network equipment and the UE. In this way, the UE and the network equipment are ensured to have the same cognition about small data processing capability, advantages of a selected small data processing solution are fully utilized, an abnormal condition caused by the capability mismatching of the network equipment and the UE is reduced, and the aims of reducing signalling overhead brought by small data transmission, optimizing network performance and improving system efficiency are finally fulfilled. For an example about the small data, data with dozens to hundreds of bytes may be defined as small data.

In an example embodiment, the data processing capability information of the access network equipment includes at least one of: information indicating whether the access network equipment supports a small data transmission method or not (that is, whether the access network equipment supports the use of an optimized small data processing method or not); and information indicating one or more small data transmission methods allowed to be used by the access network equipment (i.e. optimized small data processing methods which can be used by the access network equipment). The data processing capability information of the access network equipment can assist the UE in determining the processing method to be adopted when small data is sent or received.

In Step S202, the access network equipment may send the data processing capability information of the access network equipment to the UE in one of manners as follows: adding an IE for indicating the data processing capability information of the access network equipment into existing downlink RRC signalling; adding a downlink MAC CE for indicating the data processing capability information of the access network equipment; adding the data processing capability information of the access network equipment into a system message; sending the data processing capability information of the access network equipment via an RRC message; and indicating the data processing capability information of the access network equipment via a TAI list. It is important to note that the RRC message may be newly defined specially for transmitting the data processing capability information.

In an example embodiment, the step that the access network equipment sends the data processing capability information of the access network equipment to the UE includes that: the access network equipment sends the data processing capability information of the access network equipment to the UE by signalling interaction in a process of connection with the UE. In an example embodiment, the process of connection between the access network equipment and the UE includes one of: an RRC connection establishment process, a system message transmission process, a switching process, a mobility management process and a session management process.

### (3) On the core network equipment side

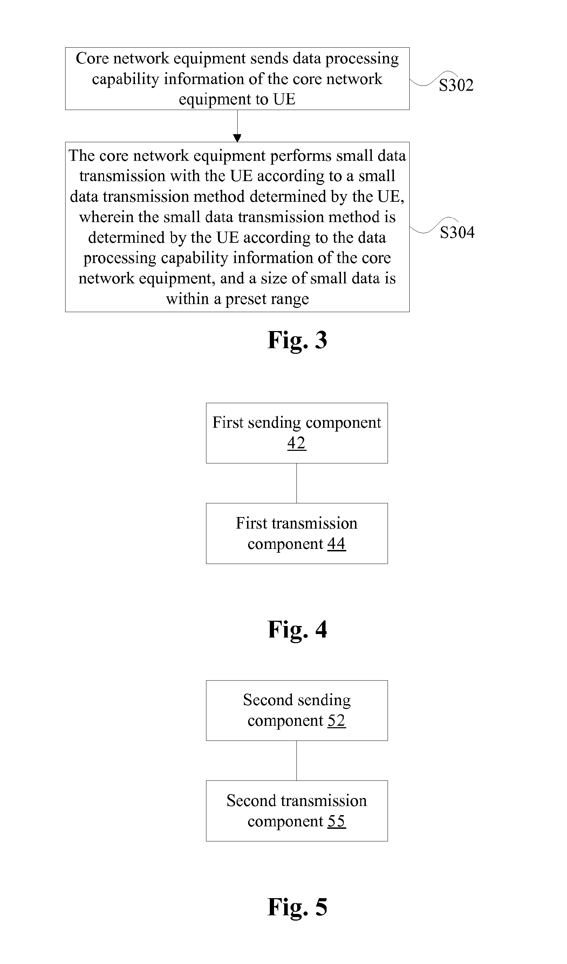

The embodiment of the present disclosure provides a data transmission method. Fig. 3 is a third flowchart of a data transmission method according to an embodiment of the present disclosure. As shown in Fig. 3, the method includes the following Step S302 to Step S304.
Step S302: core network equipment sends data processing capability information of the core network equipment to UE.
Step S304: the core network equipment performs small data transmission with the UE according to a small data transmission method determined by the UE, wherein the small data transmission method is determined by the UE according to the data processing capability information of the core network equipment, and a size of small data is within a preset range.

In the embodiment, the core network equipment sends the data processing capability information of the core network equipment to the UE to enable the UE to learn about the small data transmission method which can be used by the core network equipment to determine the method for the transmission of the small data between the core network equipment and the UE. In this way, the UE and the network equipment are ensured to have the same cognition about small data processing capability, advantages of a selected small data processing solution are fully utilized, an abnormal condition caused by the capability mismatching of the network equipment and the UE is reduced, and the aims of reducing signalling overhead brought by small data transmission, optimizing network performance and improving system efficiency are finally fulfilled.

In an example embodiment, the data processing capability information of the core network equipment includes at least one of: information indicating whether the core network equipment supports a small data transmission method or not (that is, whether the core network equipment supports the use of an optimized small data processing method or not); and information indicating one or more small data transmission methods allowed to be used by the core network equipment (i.e. optimized small data processing methods which can be used by the core network equipment). The data processing capability information of the core network equipment can assist the UE in determining the processing method to be adopted when small data is sent or received.

In Step S302, the core network equipment sends the data processing capability information of the core network equipment to the UE in one of manners as follows: adding an IE for indicating the data processing capability information of the core network equipment into existing downlink NAS signalling; indicating the data processing capability information of the core network equipment via a TAI list; and sending the data processing capability information of the core network equipment via a NAS message. It is important to note that the NAS message may be newly defined specially for transmitting the data processing capability information.

In an example embodiment, the step that the core network equipment sends the data processing capability information of the core network equipment to the UE includes that: the core network equipment sends the data processing capability information of the core network equipment to the UE by signalling interaction in a process of connection with the UE. In an example embodiment, the process of connection between the core network equipment and the UE includes one of: a mobility management process and a session management process.

Corresponding devices for implementing the methods are described below respectively.

The embodiment of the present disclosure further provides a data transmission device, which is applied to UE, and the device may be configured to implement the data transmission method according to the embodiment shown in Fig. 1 and its example embodiments. Fig. 4 is a first structure diagram of a data transmission device according to an embodiment of the present disclosure. As shown in Fig. 4, the device includes a first sending component 42 and a first transmission component 44. The structure of the device is described below in detail.

The first sending component 42 is configured to send data processing capability information of the UE to network equipment; and the first transmission component 44 is coupled to the first sending component 42, and is configured to perform small data transmission with the network equipment according to a small data transmission method determined by the network equipment, wherein the small data transmission method is determined by the network equipment according to the data processing capability information of the UE, and a size of small data is within a preset range.

In the embodiment, the first sending component 42 sends the data processing capability information of the UE to the network equipment to enable the network equipment to learn about the small data transmission method which can be used by the UE to determine the method for the transmission of the small data between the UE and the network equipment. In this way, the UE and the network equipment are ensured to have the same cognition about small data processing capability, advantages of a selected small data processing solution are fully utilized, an abnormal condition caused by the capability mismatching of the network equipment and the UE is reduced, and the aims of reducing signalling overhead brought by small data transmission, optimizing network performance and improving system efficiency are finally fulfilled. For an example about the small data, data with dozens to hundreds of bytes may be defined as small data.

In an example embodiment, the data processing capability information of the UE includes at least one of: information indicating whether the UE supports a small data transmission method or not (that is, whether the UE supports the use of an optimized small data processing method or not); and information indicating one or more small data transmission methods allowed to be used by the UE (i.e. optimized small data processing methods which can be used by the UE). The data processing capability information of the UE can assist the network equipment in determining the processing method to be adopted when small data is sent or received.

The first sending component 42 may send the data processing capability information of the UE to the network equipment in one of manners as follows: adding an IE for indicating the data processing capability information of the UE into existing uplink RRC signalling; adding an uplink MAC CE for indicating the data processing capability information of the UE; adding the data processing capability information of the UE into uplink NAS signalling; and sending the data processing capability information of the UE via an RRC message and/or an NAS message. It is important to note that the RRC message and/or the NAS message may be newly defined specially for transmitting the data processing capability information.

In an example embodiment, the first sending component 42 sends the data processing capability information of the UE to the network equipment in the following manner: sending the data processing capability information of the UE to the network equipment by signalling interaction in a process of connection between the UE and the network equipment. In an example embodiment, the process of connection between the UE and the network equipment includes one of: an RRC connection establishment process, a mobility management process, a session management process and a switching process.

The embodiment of the present disclosure further provides a data transmission device, which is applied to access network equipment, and the device may be configured to implement the data transmission method according to the embodiment shown in Fig. 2 and its example embodiments. Fig. 5 is a second structure diagram of a data transmission device according to an embodiment of the present disclosure. As shown in Fig. 5, the device includes a second sending component 52 and a second transmission component 55. The structure of the device is described below in detail.

The second sending component 52 is configured to send data processing capability information of the access network equipment to UE; and the second transmission component 54 is coupled to the second sending component 52, and is configured to perform small data transmission with the UE according to a small data transmission method determined by the UE, wherein the small data transmission method is determined by the UE according to the data processing capability information of the access network equipment, and a size of small data is within a preset range.

In the embodiment, the second sending component 52 sends the data processing capability information of the access network equipment to the UE to enable the UE to learn about the small data transmission method which can be used by the access network equipment to determine the method for the transmission of the small data between the access network equipment and the UE. In this way, the UE and the network equipment are ensured to have the same cognition about small data processing capability, advantages of a selected small data processing solution are fully utilized, an abnormal condition caused by the capability mismatching of the network equipment and the UE is reduced, and the aims of reducing signalling overhead brought by small data transmission, optimizing network performance and improving system efficiency are finally fulfilled. For an example about the small data, data with dozens to hundreds of bytes may be defined as small data.

In an example embodiment, the data processing capability information of the access network equipment includes at least one of: information indicating whether the access network equipment supports a small data transmission method or not (that is, whether the access network equipment supports the use of an optimized small data processing method or not); and information indicating one or more small data transmission methods allowed to be used by the access network equipment (i.e. optimized small data processing methods which can be used by the access network equipment). The data processing capability information of the access network equipment can assist the UE in determining the processing method to be adopted when small data is sent or received.

The second sending component 52 may send the data processing capability information of the access network equipment to the UE in one of manners as follows: adding an IE for indicating the data processing capability information of the access network equipment into existing downlink RRC signalling; adding a downlink MAC CE for indicating the data processing capability information of the access network equipment; adding the data processing capability information of the access network equipment into a system message; sending the data processing capability information of the access network equipment via an RRC message; and indicating the data processing capability information of the access network equipment via a TAI list. It is important to note that the RRC message may be newly defined specially for transmitting the data processing capability information.

In an example embodiment, the second sending component 52 sends the data processing capability information of the access network equipment to the UE in the following manner: sending the data processing capability information of the access network equipment to the UE by signalling interaction in a process of connection between the access network equipment and the UE. In an example embodiment, the process of connection between the access network equipment and the UE includes one of: an RRC connection establishment process, a system message transmission process, a switching process, a mobility management process and a session management process.

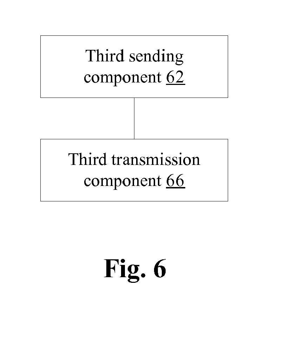

The embodiment of the present disclosure further provides a data transmission device, which is applied to core network equipment, and the device may be configured to implement the data transmission method according to the embodiment shown in Fig. 3 and its example embodiments. Fig. 6 is a third structure diagram of a data transmission device according to an embodiment of the present disclosure. As shown in Fig. 6, the device includes a third sending component 62 and a third transmission component 66. The structure of the device is described below in detail.

The third sending component 62 is configured to send data processing capability information of the core network equipment to UE; and the third transmission component 64 is coupled to the third sending component 62, and is configured to perform small data transmission with the UE according to a small data transmission method determined by the UE, wherein the small data transmission method is determined by the UE according to the data processing capability information of the core network equipment, and a size of small data is within a preset range.

In the embodiment, the third sending component 62 sends the data processing capability information of the core network equipment to the UE to enable the UE to learn about the small data transmission method which can be used by the core network equipment to determine the method for the transmission of the small data between the core network equipment and the UE. In this way, the UE and the network equipment are ensured to have the same cognition about small data processing capability, advantages of a selected small data processing solution are fully utilized, an abnormal condition caused by the capability mismatching of the network equipment and the UE is reduced, and the aims of reducing signalling overhead brought by small data transmission, optimizing network performance and improving system efficiency are finally fulfilled.

In an example embodiment, the data processing capability information of the core network equipment includes at least one of: information indicating whether the core network equipment supports a small data transmission method or not (that is, whether the core network equipment supports the use of an optimized small data processing method or not); and information indicating one or more small data transmission methods allowed to be used by the core network equipment (i.e. optimized small data processing methods which can be used by the core network equipment). The data processing capability information of the core network equipment can assist the UE in determining the processing method to be adopted when small data is sent or received.

The third sending component 62 sends the data processing capability information of the core network equipment to the UE in one of manners as follows: adding an IE for indicating the data processing capability information of the core network equipment into existing downlink NAS signalling; indicating the data processing capability information of the core network equipment via a TAI list; and sending the data processing capability information of the core network equipment via a NAS message. It is important to note that the NAS message may be newly defined specially for transmitting the data processing capability information.

In an example embodiment, the third sending component 62 sends the data processing capability information of the core network equipment to the UE in the following manner: sending the data processing capability information of the core network equipment to the UE by signalling interaction in a process of connection between the core network equipment and the UE. In an example embodiment, the process of connection between the core network equipment and the UE includes one of: a mobility management process and a session management process.

The embodiment of the present disclosure further provides a data transmission system, which includes: UE, access network equipment and core network equipment, wherein the UE includes the abovementioned data transmission device applied to the UE, the access network equipment includes the abovementioned data transmission device applied to the access network equipment, and the core network equipment includes the abovementioned data transmission device applied to the core network equipment. The structure and corresponding functions of each device have been described in detail, and will not be repeated here.

It is important to note that the data transmission devices and system correspond to the data transmission methods, and specific implementation processes have been described in the method embodiments in detail, thus will not be repeated here.

In order to make the technical solutions and implementation methods of the present disclosure clearer, the implementation processes are described below with reference to example embodiments in detail. In the following example embodiments, the data processing capability information is called small data processing capability information.

### Example embodiment 1

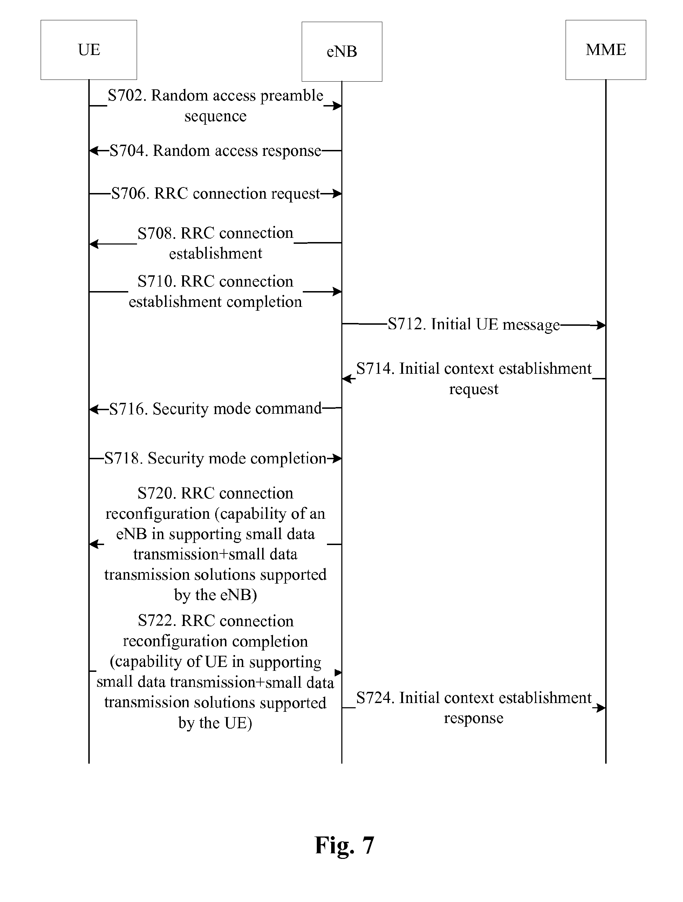

Fig. 7 is a flowchart of interaction of small data processing capability information between UE and access network equipment via existing RRC signalling according to example embodiment 1 of the present disclosure. As shown in Fig. 7, the flow includes the following Step S702 to Step S724.
Step S702: UE sends a random access preamble sequence to an eNB.

When the UE has data or signalling to be sent, a preamble sequence is selected at first, and the preamble sequence is sent to the eNB according to random access resource information configured by a system.
Step S704: the eNB sends a random access response message (Msg2) to the UE.

In the example embodiment, the random access response message may include a preamble sequence ID corresponding to the random access preamble sequence sent by the UE, uplink transmission timing adjustment, an uplink resource allocated to an RRC connection request message, a Cell-Radio Network Temporary Identity (C-RNTI) or the like.
Step S706: the UE sends an RRC connection request to the eNB.

After receiving Msg2, the UE sends, via the uplink resource allocated in the random access response message, an RRC connection establishment request message to request for the establishment of an RRC connection.
Step S708: the eNB sends an RRC connection establishment message to the UE.

The eNB sends the RRC connection establishment message to the UE to establish Signalling Radio Bearer 1 (SRB1), and allocates to the UE an uplink resource for the transmission of an RRC connection establishment completion message.
Step S710: the UE sends the RRC connection establishment completion message to the eNB.

The UE notifies a network side that SRB1 is successfully established, and sends request information to the network side according to a purpose of the establishment of the connection.
Step S712: the eNB sends the request information to a Mobile Management Entity (MME) via an initial UE message.

After the eNB receives the RRC connection establishment completion message containing an NAS Protocol Data Unit (PDU) from the UE, the eNB sends the NAS PDU in the RRC connection establishment completion message to the MME via the initial UE message.
Step S714: the MME sends an initial context establishment request message to the eNB.

The MME notifies the connection information of the corresponding UE to the eNB, including access stratum security context information, switching limit information, Quality of Service (QoS) information, a tunnel terminal ID and address information of a service gateway for a user plane, or the like.
Step S716: the eNB sends a security mode command message to the UE.

The eNB sends a security mode command to the UE or Machine Type Communication (MTC) equipment to activate the security of the UE, wherein the security mode command contains contents such as the adopted algorithm.
Step S718: the UE sends a security mode completion message to the eNB.

The UE sends the security mode completion message to the eNB to notify the eNB that the security mechanism has been activated.
Step S720: the eNB sends an RRC connection reconfiguration message to the UE.

The eNB sends the RRC connection reconfiguration message to the UE to establish a Data Radio Bearer (DRB) and Signalling Radio Bearer 2 (SRB2) for the UE.

The eNB may send a small data processing capability information IE to the UE via any downlink RRC signalling. The RRC connection reconfiguration message is adopted for transmission of the small data processing capability information IE in the example embodiment, and the eNB indicates, in the message, that the eNB has the capability of using an optimized small data processing method, and notifies, in the message, information about one or more small data processing methods supported by the eNB to the UE in a bitmap form.

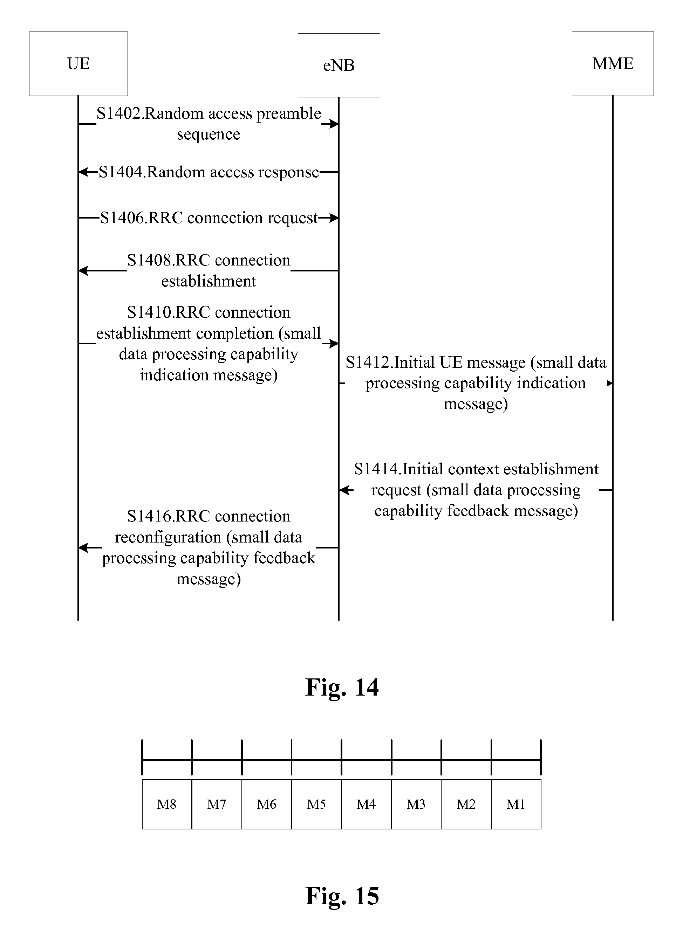

As shown in Fig. 15, M8 to M1 represent whether the eNB support transmission methods corresponding to small data transmission solutions 8 to 1 or not, setting a bit to be "1" indicates that the eNB supports the corresponding small data transmission solution, and setting the bit to be "0" indicates that the eNB does not support the corresponding small data transmission solution.

In the example embodiment, the eNB supports small data transmission solutions 1, 2, 3 and 4, then corresponding M1 to M4 bits are set to be "1", and the other bits are set to be "0". The UE supports small data transmission solutions 1 and 4, and after the UE learns about the small data transmission solutions supported by the eNB, the UE transmits small data by virtue of solution 1 and/or solution 4 in a subsequent small data transmission process.

It is important to note that Step S720 may be executed before Step S718.
Step S722: the UE sends an RRC connection reconfiguration completion message to the eNB.

The UE sends the RRC connection reconfiguration completion message to the eNB to notify the eNB that the configuration of the DRB and SRB2 has been completed.

The UE may send a small data processing capability information IE to network equipment via any uplink RRC message. The RRC connection reconfiguration completion message is adopted for transmission of the small data processing capability information IE in the example embodiment, and the UE indicates, in the message, that the UE has the capability of using an optimized small data processing method, and notifies, in the message, information about one or more small data processing methods supported by the UE to the eNB in the bitmap form.

As shown in Fig. 15, M8 to M1 represent whether the eNB supports the transmission methods corresponding to small data transmission solutions 8 to 1 or not, setting a bit to be "1" indicates that the eNB supports the corresponding small data transmission solution, and setting the bit to be "0" indicates that the eNB does not support the corresponding small data transmission solution.

In the example embodiment, the UE supports small data transmission solutions 1 and 4, then corresponding M1 and M4 bits are set to be "1", and the other bits are set to be "0". After the eNB learns about the small data transmission solutions supported by the UE, the eNB transmits the small data by virtue of solution 1 and/or solution 4 in the subsequent small data transmission process.
Step S724: the eNB sends an initial context establishment response message to the MME.

The eNB sends the initial context establishment response message to the MME, the message containing a tunnel terminal ID of the eNB, address information of the eNB for an S1 interface user plane downlink service or the like, to notify the MME that the establishment of the context has been completed.

### Example embodiment 2

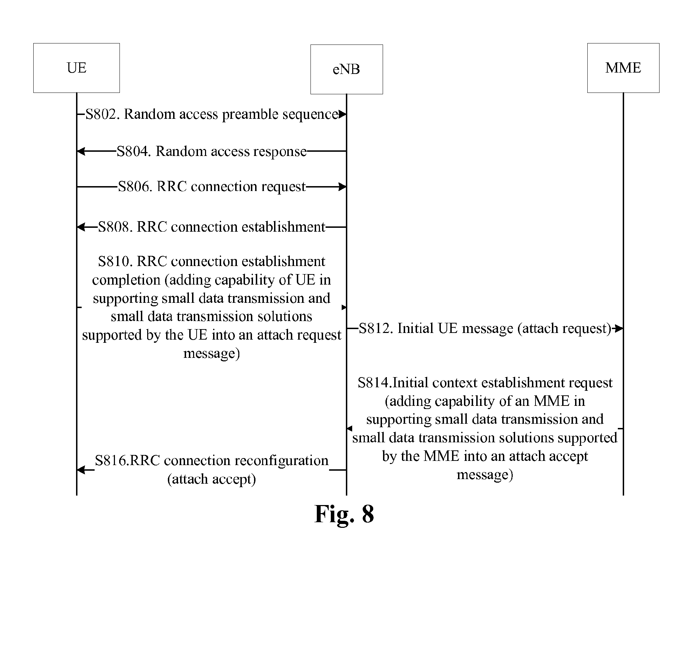

Fig. 8 is a flowchart of interaction of small data processing capability information between UE and core network equipment via NAS signalling according to example embodiment 2 of the present disclosure. As shown in Fig. 8, the flow includes the following Step S802 to Step S816.
Step S802: UE sends a random access preamble sequence to an eNB.

When the UE or MTC equipment has data or signalling to be sent, a preamble sequence is selected at first, and the preamble sequence is sent to the eNB according to random access resource information configured by a system.
Step S804: the eNB sends a random access response message (Msg2) to the UE.

The random access response message may include a preamble sequence ID corresponding to the random access preamble sequence sent by the UE, uplink transmission timing adjustment, an uplink resource allocated to an RRC connection request message, a C-RNTI or the like.
Step S806: the UE sends an RRC connection request to the eNB.

After receiving Msg2, the UE sends, by virtue of the uplink resource allocated in the random access response message, an RRC connection establishment request message to request for the establishment of an RRC connection.
Step S808: the eNB sends an RRC connection establishment message to the UE.

The eNB sends the RRC connection establishment message to the UE to establish SRB1, and allocates to the UE an uplink resource for the transmission of an RRC connection establishment completion message.
Step S810: the UE sends the RRC connection establishment completion message to the eNB.

The UE notifies a network side that SRB1 is successfully established, sends an attach request message to the network side according to a purpose of the establishment of the connection, and indicates, in the attach request message, that the UE has the capability of using an optimized small data processing method and indicates, in the attach request message, information about the small data processing methods supported by the UE.

The UE may send a small data processing capability information IE to an MME via any uplink NAS signalling. The attach request message is adopted for transmission of the small data processing capability information IE in the example embodiment.

In the example embodiment, the UE supports small data transmission solutions 2 and 3, corresponding M2 and M3 bits in Fig. 15 are set to be "1", and the other bits are set to be "0".
Step S812: the eNB sends the attach request message to the MME via an initial UE message.

The eNB receives from the UE the attach request message containing the information indicating that the UE has the capability of using the optimized small data processing method and information about one or more small data transmission methods supported by the UE, and sends the attach request message to the MME via the initial UE message.

In the example embodiment, the MME supports all the small data transmission solutions, and after the MME learns about the small data transmission solutions supported by the UE, the MME transmits small data by virtue of solution 2 and/or solution 3 in a subsequent small data transmission process.
Step S814: the MME sends an initial context establishment request message to the eNB.

The MME indicates, in an attach accept message, that the MME has the capability of using an optimized small data processing method and indicates, in the attach accept message, information about one or more small data transmission methods supported by the UE, and sends the attach accept message to the UE via the initial context establishment request message.

The MME may send a small data processing capability information IE to the UE via any downlink NAS signalling. The attach accept message is adopted for transmission of the small data processing capability information IE in the example embodiment.

In the example embodiment, the MME supports all of the eight small data transmission solutions, then the corresponding M1 to M8 bits are set to be "1".
Step S816: the eNB sends an RRC connection reconfiguration message to the UE.

The eNB sends to the UE, via the RRC connection reconfiguration message, the information indicating that the MME has the capability of using the optimized small data processing method and the information about one or more small data transmission methods supported by the UE carried in the attach accept message. The UE learns about a small data processing condition of the MME from the attach accept message.

In the example embodiment, the UE supports small data transmission solutions 2 and 3, and after the UE learns about the small data transmission solutions supported by the eNB, the UE transmits the small data by virtue of solution 2 and/or solution 3 in the subsequent small data transmission process.

### Example embodiment 3

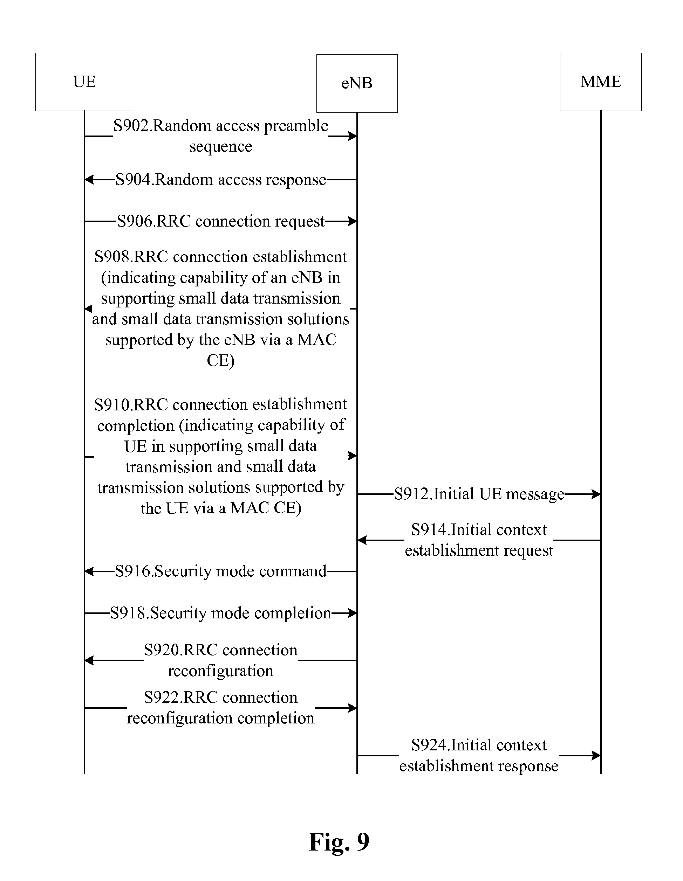

Fig. 9 is a flowchart of interaction of small data processing capability information between UE and access network equipment via MAC CE signalling according to example embodiment 3 of the present disclosure. As shown in Fig. 9, the flow includes the following Step S902 to Step S924.
Step S902: UE sends a random access preamble sequence to an eNB.

When the UE has data or signalling to be sent, a preamble sequence is selected at first, and the preamble sequence is sent to the eNB according to random access resource information configured by a system.
Step S904: the eNB sends a random access response message (Msg2) to the UE.

In the example embodiment, the random access response message may include a preamble sequence ID corresponding to the random access preamble sequence sent by the UE, uplink transmission timing adjustment, an uplink resource allocated to an RRC connection request message, a C-RNTI or the like.
Step S906: the UE sends an RRC connection request to the eNB.

After receiving Msg2, the UE sends an RRC connection establishment request message to request for the establishment of an RRC connection by virtue of the uplink resource allocated in the random access response message.
Step S908: the eNB sends an RRC connection establishment message to the UE.

The eNB sends the RRC connection establishment message to the UE to establish SRB1, and allocates to the UE an uplink resource for the transmission of an RRC connection establishment completion message. In addition, the eNB indicates to the UE, via a MAC CE, information that the eNB has the capability to support an optimized small data processing method and information about one or more small data processing methods which can be used by the eNB.

The eNB may send a small data processing capability information IE to the UE via the MAC CE during the transmission of any downlink RRC signalling or data. In the example embodiment, the related information is transmitted to the UE via the MAC CE during the transmission of the RRC connection reconfiguration message.

In the example embodiment, the Logical Channel Identity (LCID) corresponding to the MAC CE indicating the information about the capability of the eNB in supporting the optimized small data processing method and the information about the small data processing methods which can be used by the eNB is shown as Table 1, i.e. a downlink shared channel LCID table.

**Table 1**

| Sequence number | LCID value |
|---|---|
| 00000 | Common control channel |
| 00001-01010 | LCID |
| 01011-11010 | Reserved sequence numbers |
| 11011 | Activation/deactivation |
| 11100 | UE connection parsing ID |
| 11101 | Timing advance command |
| 11110 | Discontinuous Reception (DRX) command |
| 11111 | Filling |

That is, two sequence numbers in the reserved sequence numbers are used for the indication, one sequence number (01011) is configured to define the information about the capability of the eNB in supporting the optimized small data processing method, and the other sequence number (01100) is configured to define the information about the optimized small data processing methods which can be used by the eNB. A receiver can learn that there is information about the capability of the eNB in supporting the optimized small data processing method and information about small data transmission solutions supported by the eNB in a corresponding MAC PDU after reading the LCID, and then can read data in the MAC CE.

In the example embodiment, a value of the information about the capability of the eNB in supporting the optimized small data processing method is set to be "1" to indicate that the eNB supports optimized small data processing, and corresponding bits for defining the small data transmission solutions supported by the eNB are all set to be "1" to indicate that the eNB supports all the small data transmission solutions in Fig. 15.

In the example embodiment, the UE supports small data transmission solutions 7 and 8, and after the UE learns about the small data transmission solutions supported by the eNB, the UE transmits the small data by virtue of solution 7 and/or solution 8 in the subsequent small data transmission process.
Step S910: the UE sends an RRC connection establishment completion message to the eNB.

The UE notifies a network side that SRB1 is successfully established, and sends request information to the network side according to a purpose of the establishment of the connection.

In the example embodiment, the UE indicates, to the eNB via a MAC CE, information about the capability of the UE in supporting an optimized small data processing method and information about the small data processing methods supported by the UE. The UE may send a small data processing capability information IE to the eNB via the MAC CE during the transmission of any uplink RRC signalling or data. In the example embodiment, the related information is transmitted to the eNB via the MAC CE during the transmission of the RRC connection establishment completion message.

In the example embodiment, the LCID corresponding to the MAC CE indicating the information about the capability of the UE in supporting the optimized small data processing method and the information about the small data processing methods supported by the UE is shown as Table 2, i.e. an uplink shared channel LCID table.

**Table 2**

| Sequence number | LCID value |
|---|---|
| 00000 | Common control channel |
| 00001-01010 | LCID |
| 01011-11000 | Reserved sequence numbers |
| 11001 | Extended power headroom report |
| 11010 | Power headroom report |
| 11011 | C-RNTI |
| 11100 | Truncated buffer status report |
| 11101 | Short buffer status report |
| 11110 | Long buffer status report |
| 11111 | Filling information |

That is, two sequence numbers in the reserved sequence numbers are used for the indication, one sequence number (01011) is configured to define the information about the capability of the UE in supporting the optimized small data processing method, and the other sequence number (01100) is configured to define the information about the optimized small data processing methods supported by the UE. The receiver can learn that there is information about the capability of the UE in supporting small data transmission and information about small data transmission solutions supported by the UE in a corresponding MAC PDU after reading the LCID, and then can read data in the MAC CE.

In the example embodiment, a value of the information about the capability of the UE in supporting the optimized small data processing method is set to be "1" to indicate that the UE supports optimized small data processing, and corresponding bits for defining small data transmission solutions 7 and 8 supported by the UE are set to be "1" to indicate that the UE supports small data transmission solutions 7 and 8 in Fig. 15, and the other bits are all set to be "0".

In the example embodiment, the UE supports small data transmission solutions 7 and 8, and after the eNB learns about the small data transmission solutions supported by the UE, the eNB transmits the small data by virtue of solution 7 and/or solution 8 in the subsequent small data transmission process.
Step S912: the eNB sends request information to an MME via an initial UE message.

After the eNB receives the RRC connection establishment completion message containing an NAS PDU from the UE, the eNB sends the NAS PDU in the RRC connection establishment completion message to the MME via the initial UE message.
Step S914: the MME sends an initial context establishment request message to the eNB.

The MME notifies the connection information of the corresponding UE to the eNB, including access stratum security context information, switching limit information, QoS information, a tunnel terminal ID and address information of a service gateway for a user plane, or the like.
Step S916: the eNB sends a security mode command message to the UE.

The eNB sends a security mode command to the UE or MTC equipment to activate the security of the UE, wherein the security mode command contains contents such as the adopted algorithm.
Step S918: the UE sends a security mode completion message to the eNB.

The UE sends the security mode completion message to the eNB to notify the eNB that the security mechanism has been activated.
Step S920: the eNB sends an RRC connection reconfiguration message to the UE.

The eNB sends the RRC connection reconfiguration message to the UE to establish a DRB and SRB2 for the UE.

It is important to note that Step S920 may be executed before Step S918.
Step S922: the UE sends an RRC connection reconfiguration completion message to the eNB.

The UE sends the RRC connection reconfiguration completion message to the eNB to notify the eNB that the configuration of the DRB and SRB2 has been completed.
Step S924: the eNB sends an initial context establishment response message to the MME.

The eNB sends the initial context establishment response message to the MME, the message containing a tunnel terminal ID of the eNB, address information of the eNB for an S1 interface user plane downlink service or the like, to notify the MME that the establishment of the context has been completed.

### Example embodiment 4

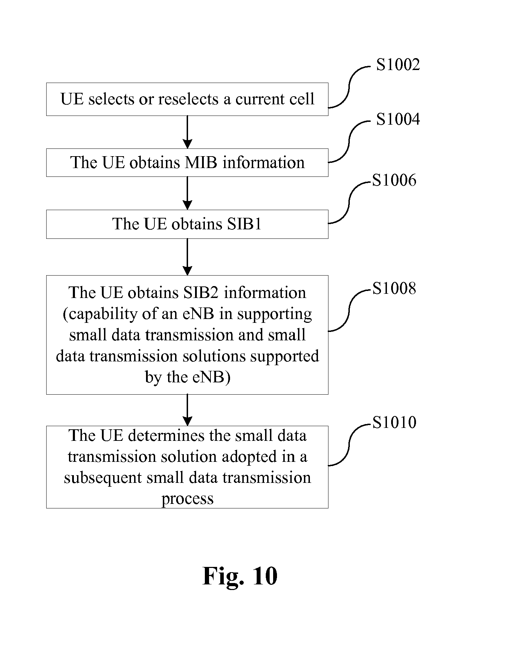

Fig. 10 is a flowchart of indicating small data processing capability information to UE by access network equipment via a system message according to example embodiment 4 of the present disclosure. As shown in Fig. 10, the flow includes the following Step S1002 to Step S1010.
Step S1002: UE selects or reselects a current cell.

The UE selects the current cell according to a cell selection or reselection criterion, and resides in the current cell.
Step S1004: the UE obtains Master Information Block (MIB) information sent by an eNB.

The MIB information obtained by the UE mainly includes information such as a downlink bandwidth of the cell and a system frame number, which is used for obtaining other information from the cell.
Step S1006: the UE obtains a System Information Block (SIB) 1.

The UE obtains SIB1, wherein the SIB1 mainly contains information for cell access limit such as information about whether the cell is forbidden to be accessed or not, and SIB1 further includes scheduling information of other SIBs.
Step S1008: the UE obtains SIB2 information.

The UE obtains the SIB2 information, wherein the SIB2 mainly includes radio resource configuration information or the like. In the example embodiment, the eNB adds information about the capability of the eNB in supporting an optimized small data processing method and the supported small data processing solutions into SIB2, wherein the eNB sets a bit corresponding to the information about the capability in supporting the optimized small data processing method to be "1" to indicate that optimized small data transmission is supported, bits corresponding to small data transmission solutions M5 and M6 supported by the eNB are set to be "1", and the other bits are all set to be "0". The eNB may send a small data processing capability IE to the UE via any SIB message, and related small data processing information transmitted to the UE is added into SIB2 in the example embodiment.
S1010: the UE determines the small data transmission solution(s) adopted in a subsequent small data transmission process.

In the example embodiment, the UE supports small data processing solutions M3 and M8, and after the UE learns about the small data processing solutions supported by the eNB via a system message, the UE determines not to adopt the optimized small data processing solution in the subsequent small data transmission process, and performs transmission according to a normal data transmission flow.

### Example embodiment 5

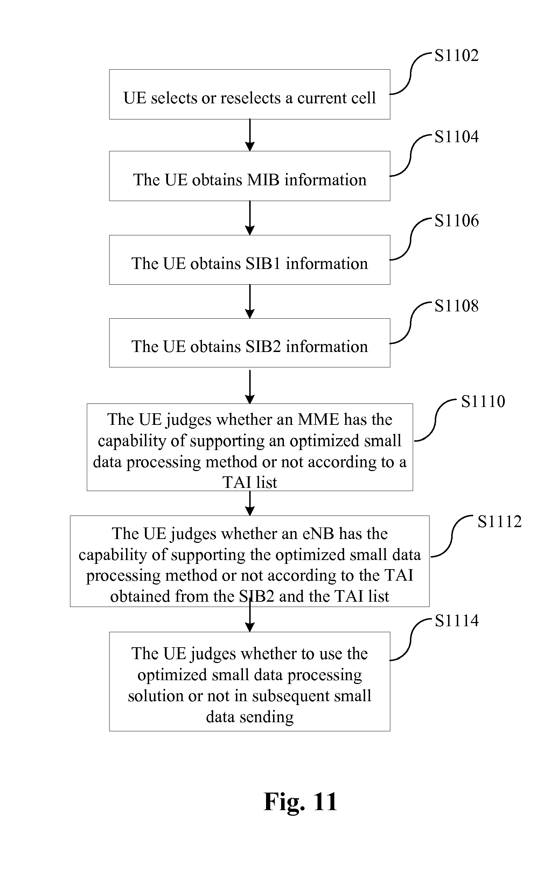

Fig. 11 is a flowchart of learning about small processing capability information of access network equipment and core network equipment by UE via a TAI list and system information according to example embodiment 5 of the present disclosure. As shown in Fig. 11, the flow includes the following Step S1102 to Step S1114.
Step S1102: UE selects or reselects a current cell.

The UE selects the current cell according to a cell selection or reselection criterion, and resides in the current cell.
Step S1104: the UE obtains MIB information sent by an eNB.

The MIB information obtained by the UE mainly includes information such as a downlink bandwidth of the cell and a system frame number, which is used for obtaining other information from the cell.
Step S1106: the UE obtains SIB1.

The UE obtains the SIB1, wherein the SIB1 mainly contains information for cell access limit such as information about whether the cell is forbidden to be accessed or not, and SIB1 further includes scheduling information of other SIBs.
Step S1108: the UE obtains SIB2 information.

The UE obtains the SIB2 information, wherein the SIB2 mainly includes information such as a Tracking Area Code (TAC) and radio resource access.
Step S1110: the UE judges whether an MME has the capability of supporting an optimized small data processing method or not according to an obtained TAI list.

Structures corresponding to the header of the TAI list bytes are shown in Table 3.

**Table 3 Header of TAI List**

| 8 | 7 | 6 | 5 | 4 | 3 | 2 | 1 |
|---|---|---|---|---|---|---|---|
| Reserved bit | List type | | Unit number | | | | |

In the example embodiment, a reserved bit is set to be "1" to indicate that the eNB corresponding to the TAC in the list has the capability of supporting an optimized small data processing method, and the reserved bit is set to be "0" to indicate that the eNB corresponding to the TAC in the list does not support an optimized small data processing method. At present, the eNBs in the TAI list are all managed by the same MME, therefore, the corresponding MME has the capability of supporting the optimized small data processing method.
Step S1112: the UE judges whether the eNB has the capability of supporting the optimized small data processing method or not according to obtained SIB2.

In the example embodiment, after acquiring the TAC of the current eNB from SIB2, the UE learns about whether the current eNB has the capability of supporting the optimized small data processing method or not by comparison with the TAC in the TAI list.

In the example embodiment, the TAI list stored by the UE is shown in Table 4, and is a TAI list corresponding to a continuous TAC in the same Public Land Mobile Network (PLMN).

**Table 4**

| 8 | 7 | 6 | 5 | 4 | 3 | 2 | 1 | |
|---|---|---|---|---|---|---|---|---|
| 1 | List type | | Unit number | | | | | Byte 1 |
| Mobile country code 2 | | | | Mobile country code 1 | | | | Byte 2 |
| Mobile country code 3 | | | | Mobile country code 3 | | | | Byte 3 |
| Mobile country code 2 | | | | Mobile country code 1 | | | | Byte 4 |
| TAC 1 | | | | | | | | Byte 5 |
| TAC 1 (continuous) | | | | | | | | Byte 6 |

In the example embodiment, the TAC corresponding to the eNB is included in the TAI list in which the reserved bit is set to be "1", that is, the current eNB supports the optimized small data processing method.
Step S1114: the UE judges whether to use the optimized small data processing solution or not in subsequent small data sending.

In the example embodiment, the UE learns that the eNB supports the optimized small data processing solution via the system information and the TAI list, so that the optimized small data processing solution may be adopted during subsequent small data sending.

### Example embodiment 6

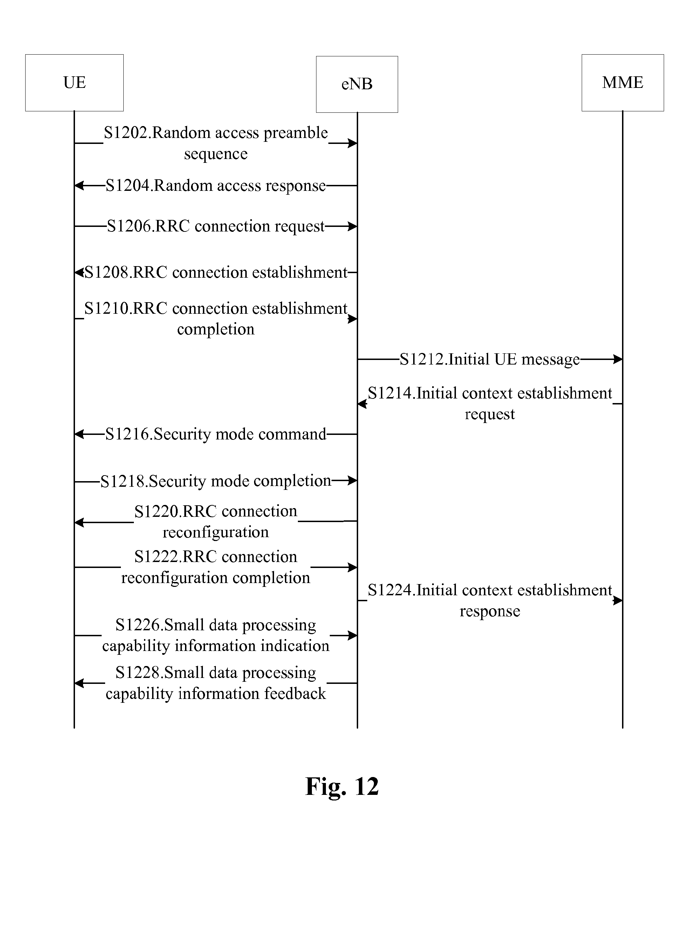

Fig. 12 is a flowchart of interaction of small data processing capability information between UE and access network equipment via new RRC signalling according to example embodiment 6 of the present disclosure. As shown in Fig. 12, the flow includes the following Step S1202 to Step S1228.
Step S1202: UE sends a random access preamble sequence to an eNB.

When the UE has data or signalling to be sent, a preamble sequence is selected at first, and the preamble sequence is sent to the eNB according to random access resource information configured by a system.
Step S1204: the eNB sends a random access response message (Msg2) to the UE.

In the example embodiment, the random access response message may include a preamble sequence ID corresponding to the random access preamble sequence sent by the UE, uplink transmission timing adjustment, an uplink resource allocated to an RRC connection request message, a C-RNTI or the like.
Step S1206: the UE sends an RRC connection request to the eNB.

After receiving Msg2, the UE sends an RRC connection establishment request message to request for the establishment of an RRC connection by virtue of the uplink resource allocated in the random access response message.
Step S1208: the eNB sends an RRC connection establishment message to the UE.

The eNB sends the RRC connection establishment message to the UE to establish SRB1, and allocates to the UE an uplink resource for the transmission of an RRC connection establishment completion message.
Step S1210: the UE sends the RRC connection establishment completion message to the eNB.

The UE notifies a network side that SRB1 is successfully established, and sends request information to the network side according to a purpose of the establishment of the connection.
Step S1212: the eNB sends the request information to an MME via an initial UE message.

After the eNB receives the RRC connection establishment completion message containing an NAS PDU from the UE, the eNB sends the NAS PDU in the RRC connection establishment completion message to the MME via the initial UE message.
Step S1214: the MME sends an initial context establishment request message to the eNB.

The MME notifies the connection information of the corresponding UE to the eNB, including access stratum security context information, switching limit information, QoS information, a tunnel terminal ID and address information of a service gateway for a user plane, or the like.
Step S1216: the eNB sends a security mode command message to the UE.

The eNB sends a security mode command to the UE or MTC equipment to activate the security of the UE, wherein the security mode command contains contents such as the adopted algorithm.
Step S1218: the UE sends a security mode completion message to the eNB.

The UE sends the security mode completion message to the eNB to notify the eNB that the security mechanism has been activated.
Step S1220: the eNB sends an RRC connection reconfiguration message to the UE.

The eNB sends the RRC connection reconfiguration message to the UE to establish a DRB and SRB2 for the UE.

It is important to note that Step S1220 may be executed before S1218.
Step S1222: the UE sends an RRC connection reconfiguration completion message to the eNB.

The UE sends the RRC connection reconfiguration completion message to the eNB to notify the eNB that the configuration of the DRB and SRB2 has been completed.
Step S1224: the eNB sends an initial context establishment response message to the MME.

The eNB sends the initial context establishment response message to the MME, the message containing a tunnel terminal ID of the eNB, address information of the eNB for an S1 interface user plane downlink service or the like, to notify the MME that the establishment of the context has been completed.
Step S1226: the UE sends a small data processing capability information indication message to the eNB.

The UE indicates, in the message, that the UE has the capability of using an optimized small data processing method, and notifies, in the message, information about one or more small data processing methods supported by the UE to the eNB in a bitmap form. The new small data processing capability information indication message includes an RRC processing ID field and a small data processing capability field; and of course, a non-critical extended field or the like may further be included according to needs. The small data processing capability field may further include a capability information field about the use of the optimized small data processing method and/or a small data processing method information field.

As shown in Fig. 15, M8 to M1 represent whether the eNB supports the transmission methods corresponding to small data transmission solutions 8 to 1 or not, setting a bit to be "1" indicates that the eNB supports the corresponding small data transmission solution, and setting the bit to be "0" indicates that the eNB does not support the corresponding small data transmission solution.

In the example embodiment, the UE supports small data transmission solutions 1 and 4, then corresponding M1 and M4 bits are set to be "1", and the other bits are set to be "0". After the eNB learns about the small data transmission solutions supported by the UE, the eNB transmits the small data by virtue of solution 1 and/or solution 4 in a subsequent small data transmission process.
Step S1228: the eNB sends a small data processing capability information feedback message to the UE.

The eNB indicates, in the message, that the eNB has the capability of using an optimized small data processing method, and notifies, in the message, information about one or more small data processing methods supported by the eNB to the UE in the bitmap form. The new small data processing capability information feedback message includes an RRC processing ID field and a small data processing capability field; and of course, a non-critical extended field or the like may further be included according to needs. The small data processing capability field may further include a capability information field about the use of the optimized small data processing method and/or a small data processing method information field.

As shown in Fig. 15, M8 to M1 represent whether the eNB support transmission methods corresponding to small data transmission solutions 8 to 1 or not, setting a bit to be "1" indicates that the eNB supports the corresponding small data transmission solution, and setting the bit to be "0" indicates that the eNB does not support the corresponding small data transmission solution.

In the example embodiment, the eNB supports small data transmission solutions 1, 2, 3 and 4, then corresponding M1 to M4 bits are set to be "1", and the other bits are set to be "0". The UE supports small data transmission solutions 1 and 4, and after the UE learns about the small data transmission solutions supported by the eNB, the UE transmits small data by virtue of solution 1 and/or solution 4 in a subsequent small data transmission process.
Step S1226 and Step S1228 may be executed at any time after Step S1210.

### Example embodiment 7

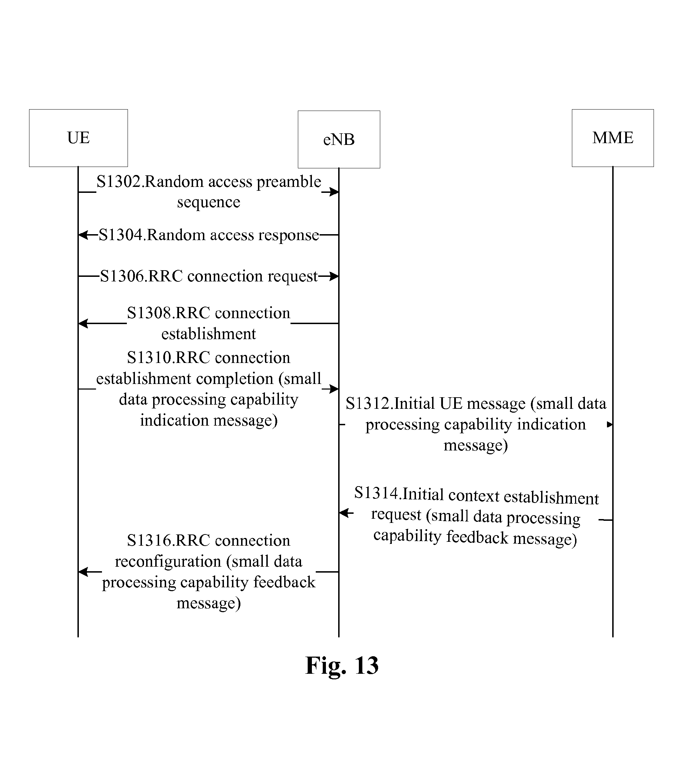

Fig. 13 is a flowchart of interaction of small data processing capability information between UE and access network equipment via new NAS signalling according to example embodiment 7 of the present disclosure. As shown in Fig. 13, the flow includes the following Step S1302 to Step S1316.
Step S1302: UE sends a random access preamble sequence to an eNB.

When the UE has data or signalling to be sent, a preamble sequence is selected at first, and the preamble sequence is sent to the eNB according to random access resource information configured by a system.
Step S1304: the eNB sends a random access response message (Msg2) to the UE.

The random access response message may include a preamble sequence ID corresponding to the random access preamble sequence sent by the UE, uplink transmission timing adjustment, an uplink resource allocated to an RRC connection request message, a C-RNTI or the like.
Step S1306: the UE sends an RRC connection request to the eNB.

The UE sends an RRC connection establishment request message to request for the establishment of an RRC connection by virtue of the uplink resource allocated in the random access response message after receiving Msg2.
Step S1308: the eNB sends an RRC connection establishment message to the UE.

The eNB sends the RRC connection establishment message to the UE to establish SRB1, and allocates to the UE an uplink resource for the transmission of an RRC connection establishment completion message.
Step S1310: the UE sends the RRC connection establishment completion message to the eNB.

The UE notifies a network side that SRB1 is successfully established, and sends a small data processing capability indication message to the network side in an NAS PDU, to indicate information about capability of the UE in using an optimized small data processing method and information about the small data processing methods supported by the UE. The small data processing capability indication message includes a small data processing capability information field, and further includes a field such as a Globally Unique Temporary Identity (GUTI) and Protocol Configuration Options (PCO).

In the example embodiment, the UE supports small data transmission solutions 2 and 3, corresponding M2 and M3 bits in Fig. 15 are set to be "1", and the other bits are set to be "0".
Step S1312: the eNB sends a small data processing capability feedback message to an MME via an initial UE message.

The eNB receives from the UE the small data processing capability feedback message containing the information indicating the capability of the UE in using the optimized small data processing method and the information about one or more small data transmission methods supported by the UE, and sends the message to the MME via the initial UE message. The small data processing capability feedback message includes the small data processing capability information field, and may further include a field such as the GUTI and the PCO.

In the example embodiment, the MME supports all the small data transmission solutions, and after the MME learns about the small data transmission solutions supported by the UE, the MME transmits small data by virtue of solution 2 and/or solution 3 in a subsequent small data transmission process.
Step S1314: the MME sends an initial context establishment request message to the eNB.

The MME contains, in the small data processing capability feedback message, information about the capability of the MME in using the optimized small data processing method and information about one or more small data transmission methods supported by the UE, and sends the small data processing capability feedback message to the UE via the initial context establishment request message.

In the example embodiment, the MME supports all of the eight small data transmission solutions, then the corresponding M1 to M8 bits are set to be "1".
Step S1316: the eNB sends an RRC connection reconfiguration message to the UE.

The eNB sends to the UE, via the RRC connection reconfiguration message, the information indicating the capability of the MME in using the optimized small data processing method and the information about one or more small data transmission methods supported by the UE carried in the small data processing capability feedback message. The UE learns about a small data processing condition of the MME from the small data processing capability feedback message.

In the example embodiment, the UE supports small data transmission solutions 2 and 3, and after the UE learns about the small data transmission solutions supported by the eNB, the UE transmits the small data by virtue of solution 2 and/or solution 3 in the subsequent small data transmission process.

### Example embodiment 8

Fig. 14 is a flowchart of implementation of small data processing capability information interaction between UE and a target base station via RRC signalling according to example embodiment 8 of the present disclosure. As shown in Fig. 14, the flow includes the following Step S1402 to Step S1414.
Step S1402: UE sends a measurement report to a source eNB.

When the UE satisfies a configured measurement report condition, the UE reports a measurement result to the source eNB.
Step S1404: the source eNB sends a handover request message to a target eNB.

After receiving the measurement result reported by the UE, the source eNB determines to hand over the UE according to radio resource management information, and initiates a handover request to the target eNB.
Step S1406: the target eNB sends a handover request confirmation message to the source eNB.

The target eNB judges whether the UE can access or not according to an access permission control condition after receiving the handover request of the source eNB, the target eNB permits the UE to access in the example embodiment, a dedicated random access preamble sequence, target eNB security algorithm information or the like are sent to the UE in the handover request confirmation message, and the target eNB sends the handover request confirmation message to the source eNB. The target eNB contains information indicating the capability of the target eNB in using an optimized small data processing method and information about the small data transmission methods supported by the UE in the handover request confirmation message.

In the example embodiment, the target eNB supports all the eight small data transmission solutions, and then corresponding M1 to M8 bits are all set to be "1".
Step S1408: the source eNB sends an RRC connection reconfiguration message to the UE.

The source eNB sends the information in the handover request confirmation message received from the target eNB to the UE via the RRC connection reconfiguration message, and the information is adopted for a subsequent operating process by the UE. In the example embodiment, the source eNB sends to the UE, via the RRC connection reconfiguration message, the information indicating the capability of the target eNB in using the optimized small data processing method and the information about one or more small data transmission methods supported by the UE carried in the handover request confirmation message.

In the example embodiment, the UE supports small data transmission solutions 2 and 3, and after the UE learns about the small data transmission solutions supported by the target eNB, the UE transmits small data by virtue of solution 2 and/or solution 3 in the subsequent small data transmission process.
Step S1410: the UE sends a random access preamble sequence to the target eNB.

The UE sends the random access preamble sequence to the target eNB, and the sequence is provided by the target eNB.
Step S1412: the target eNB sends a random access response message to the UE.

The random access response message may include a preamble sequence ID corresponding to the random access preamble sequence sent by the UE, uplink transmission timing adjustment, an uplink resource allocated to an RRC connection request message, a C-RNTI or the like.
Step S1414: the UE sends an RRC connection reconfiguration completion message to the target eNB.

In the example embodiment, the UE sends the information about the capability of the UE in using the optimized small data processing method and the information about one or more small data transmission methods supported by the UE to the target eNB via the RRC connection reconfiguration completion message.

In the example embodiment, the UE has the capability of using the optimized small data processing method, UE supports small data transmission solutions 2 and 3, then corresponding M2 and M3 bits in Fig. 15 are set to be "1", and the other bits are set to be "0". The target eNB supports all of the small data transmission solutions, then after the target eNB learns about the small data transmission solutions supported by the UE, the target eNB transmits the small data by virtue of solution 2 and/or solution 3 in the subsequent small data transmission process.

It is important to note that the steps shown in the flowcharts of the drawings may be executed in a computer system, for example, a group of computers, capable of executing instructions, and moreover, although a logic sequence is shown in the flowcharts, the shown or described steps may be executed in a sequence different from the sequence here under a certain condition.

From the above, according to the embodiment of the present disclosure, the UE sends the data processing capability information of the UE to the network equipment to enable the network equipment to learn about the small data transmission methods which can be used by the UE to determine the method for the transmission of the small data between the UE and the network equipment. Similarly, the network equipment may also send the data processing capability information of the network equipment to the UE, so that the UE and the network equipment are ensured to have the same cognition about small data processing capability. In this way, advantages of a finally selected small data processing solution are fully utilized, an abnormal condition caused by the capability mismatching of the network equipment and the UE is reduced, and the aims of reducing signalling overhead brought by small data transmission, optimizing network performance and improving system efficiency are finally fulfilled.

Obviously, those skilled in the art should know that each component or step of the present disclosure may be implemented by a universal computing device, and the components or steps may be concentrated on a single computing device or distributed on a network formed by multiple computing devices, and may optionally be implemented by programmable codes executable for the computing devices, so that the components or steps may be stored in a storage device for execution with the computing devices, or form each integrated circuit component, or multiple components or steps therein may form a single integrated circuit component for implementation. As a consequence, the present disclosure is not limited to any specific hardware and software combination.

The above is only the example embodiment of the present disclosure and not intended to limit the present disclosure, and for those skilled in the art, the present disclosure may have various modifications and variations. Any modifications, equivalent replacements, improvements or the like within the principle of the present disclosure shall fall within the scope of protection defined by the claims of the present disclosure.

### Industrial Practicability

The technical solutions provided by the embodiment of the present disclosure may be applied to the field of communication, and the UE sends the data processing capability information of the UE to the network equipment to enable the network equipment to learn about the small data transmission method which can be used by the UE to determine the method for the transmission of the small data between the UE and the network equipment, and similarly, the network equipment may also send the data processing capability information of the network equipment to the UE, so that the UE and the network equipment are ensured to have the same cognition about small data processing capability, advantages of a finally selected small data processing solution are fully utilized, and an abnormal condition caused by the capability mismatching of the network equipment and the UE is reduced.

## Claims

1. A data transmission method, **characterized by** comprising:
sending, by User Equipment (UE), data processing capability information of the UE to network equipment; and
performing, by the UE, small data transmission with the network equipment according to a small data transmission method determined by the network equipment, wherein the small data transmission method is determined by the network equipment according to the data processing capability information of the UE, and a size of small data is within a preset range.

2. The method according to claim 1, **characterized in that** the UE sends the data processing capability information of the UE to the network equipment in one of manners as follows:
adding an Information Element (IE) for indicating the data processing capability information of the UE into existing uplink Radio Resource Control (RRC) signalling;
adding an uplink Media Access Control (MAC) Control Element (CE) for indicating the data processing capability information of the UE;
adding the data processing capability information of the UE into uplink Non-Access Stratum (NAS) signalling; and
sending the data processing capability information of the UE via an RRC message and/or an NAS message.

3. The method according to claim 1, **characterized in that** sending, by the UE, the data processing capability information of the UE to the network equipment comprises: sending, by the UE, the data processing capability information of the UE to the network equipment by signalling interaction in a process of connection with the network equipment.

4. The method according to claim 3, **characterized in that** the process of connection between the UE and the network equipment comprises one of: an RRC connection establishment process, a mobility management process, a session management process and a switching process.

5. The method according to any one of claims 1 to 4, **characterized in that** the data processing capability information of the UE comprises at least one of:
information indicating whether the UE supports a small data transmission method or not; and
information indicating one or more small data transmission methods allowed to be used by the UE.

6. A data transmission method, **characterized by** comprising:
sending, by access network equipment, data processing capability information of the access network equipment to User Equipment (UE); and
performing, by the access network equipment, small data transmission with the UE according to a small data transmission method determined by the UE, wherein the small data transmission method is determined by the UE according to the data processing capability information of the access network equipment, and a size of small data is within a preset range.

7. The method according to claim 6, **characterized in that** the access network equipment sends the data processing capability information of the access network equipment to the UE in one of manners as follows:
adding an Information Element (IE) for indicating the data processing capability information of the access network equipment into existing downlink Radio Resource Control (RRC) signalling;
adding a downlink Media Access Control (MAC) Control Element (CE) for indicating the data processing capability information of the access network equipment;
adding the data processing capability information of the access network equipment into a system message;
sending the data processing capability information of the access network equipment via an RRC message; and
indicating the data processing capability information of the access network equipment via a Tracking Area Identity (TAI) list.

8. The method according to claim 6, **characterized in that** sending, by the access network equipment, the data processing capability information of the access network equipment to the UE comprises: sending, by the access network equipment, the data processing capability information of the access network equipment to the UE by signalling interaction in a process of connection with the UE.

9. The method according to claim 8, **characterized in that** the process of connection between the access network equipment and the UE comprises one of: an RRC connection establishment process, a system message transmission process, a switching process, a mobility management process and a session management process.

10. The method according to any one of claims 6 to 9, **characterized in that** the data processing capability information of the access network equipment comprises at least one of:
information indicating whether the access network equipment supports a small data transmission method or not; and
information indicating one or more small data transmission methods allowed to be used by the access network equipment.

11. A data transmission method, **characterized by** comprising:
sending, by core network equipment, data processing capability information of the core network equipment to User Equipment (UE); and
performing, by the core network equipment, small data transmission with the UE according to a small data transmission method determined by the UE, wherein the small data transmission method is determined by the UE according to the data processing capability information of the core network equipment, and a size of small data is within a preset range.

12. The method according to claim 11, **characterized in that** the core network equipment sends the data processing capability information of the core network equipment to the UE in one of manners as follows:
adding an Information Element (IE) for indicating the data processing capability information of the core network equipment into existing downlink Non-Access Stratum (NAS) signalling;
indicating the data processing capability information of the core network equipment via a Tracking Area Identity (TAI) list; and
sending the data processing capability information of the core network equipment via a NAS message.

13. The method according to claim 11, **characterized in that** sending, by the core network equipment, the data processing capability information of the core network equipment to the UE comprises: sending, by the core network equipment, the data processing capability information of the core network equipment to the UE by signalling interaction in a process of connection with the UE.

14. The method according to claim 13, **characterized in that** the process of connection between the core network equipment and the UE comprises one of: a mobility management process and a session management process.

15. The method according to any one of claims 11 to 14, **characterized in that** the data processing capability information of the core network equipment comprises at least one of:
information indicating whether the core network equipment supports a small data transmission method or not; and
information indicating one or more small data transmission methods allowed to be used by the core network equipment.

16. A data transmission device, **characterized in that** the data transmission device is applied to User Equipment (UE) and comprises:
a first sending component, configured to send data processing capability information of the UE to network equipment; and
a first transmission component, configured to perform small data transmission with the network equipment according to a small data transmission method determined by the network equipment, wherein the small data transmission method is determined by the network equipment according to the data processing capability information of the UE, and a size of small data is within a preset range.

17. A data transmission device, **characterized in that** the data transmission device is applied to access network equipment and comprises:
a second sending component, configured to send data processing capability information of the access network equipment to User Equipment (UE); and
a second transmission component, configured to perform small data transmission with the UE according to a small data transmission method determined by the UE, wherein the small data transmission method is determined by the UE according to the data processing capability information of the access network equipment, and a size of small data is within a preset range.

18. A data transmission device, **characterized in that** the data transmission device is applied to core network equipment and comprises:
a third sending component, configured to send data processing capability information of the core network equipment to User Equipment (UE); and
a third transmission component, configured to perform small data transmission with the UE according to a small data transmission method determined by the UE, wherein the small data transmission method is determined by the UE according to the data processing capability information of the core network equipment, and a size of small data is within a preset range.

19. A data transmission system, **characterized by** comprising: User Equipment (UE), access network equipment and core network equipment, wherein the UE comprises the data transmission device according to claim 16, the access network equipment comprises the data transmission device according to claim 17, and the core network equipment comprises the data transmission device according to claim 18.
